Europäisches Patentamt

European Patent Office

Office européen des brevets

(11) Publication number: **0 259 525**
**A1**

## EUROPEAN PATENT APPLICATION

(21) Application number: **86306909.2**

(22) Date of filing: **08.09.86**

(51) Int. Cl.⁴: **C02F 1/50** , **E04H 3/20** , **C02F 1/00**

(43) Date of publication of application:
**16.03.88 Bulletin 88/11**

(84) Designated Contracting States:
**AT BE CH DE FR GB IT LI LU NL SE**

(71) Applicant: **Crystalclear Co. S.A.**
**22 Parc du Chateau Banquet**
**CH-1202 Geneva(CH)**

(72) Inventor: **Baldwin, David Arthur**
**139 River Road**
**Malanshof Randburg 2194(ZA)**

(74) Representative: **Virr, Dennis Austin et al**
**Urquhart-Dykes & Lord Floor B Milburn**
**House Dean Street**
**Newcastle upon Tyne NE1 1LE(GB)**

(54) **Water treatment method and product.**

(57) A method of treating a body of water, for example a swimming pool, a spa bath or a hot-tub, comprises adding to the water a liquid component and an oxidising component. The liquid component comprises, added separately or mixed together, a polymeric cationic quaternary ammonium compound, a sequestering agent and a copper salt. The invention also includes a product for use in the foregoing process, which comprises the above-described liquid component in its admixed form and the oxidising component in tablet form. Specific examples of suitable such components are given.

EP 0 259 525 A1

## WATER TREATMENT METHOD AND PRODUCT

This invention relates to a method of treatment of bodies of water, in particular swimming pools, spa-baths and hot-tubs, in order to destroy pathogenic materials therein. The invention also includes a product suitable for use in that method.

Bacterial and viral contamination of swimming pools, spa-baths and hot-tubs can occur via the original water supply and from airborne particles. The major source of contamination, however, is the bathers themselves. The average bather introduces as many as 166 million bacteria which include coliforms and staphylococci. Although most of these bacteria are non-pathogenic, the possibility of cross-infection of swimmers necessitates the rapid and efficient destruction of potential pathogens. The possibility of infection is obviously increased in spa-baths and hot-tubs, which have a much lower volume of water and consequently a higher bather load than swimming pools.

Chlorine and chlorine-based chemicals have been used successfully for many years to disinfect water against bacteria and viruses. The aqueous chemistry of chlorine has been discussed in detail in the prior art, and chlorine, both in the hypochlorous acid form (HOCl) and as a hypochlorite (OCl⁻), has been tested against a number of bacteria and viruses. The effectiveness of a water treatment against various bacteria and viruses is measured by the time required for killing 99% of the organisms and depends on the organism, the pH, and the chlorine concentration. Temperature has a complex effect although in general, the time for 99% kill decreases with an increase in temperature, all other factors being constant. An important contaminant, such as Pseudomonasaeruginosa, has been found to be relatively insensitive to some disinfectants but is destroyed by chlorine as long as the chlorine concentration remains above 0.4 parts per million (ppm).

Chlorine alone as a water treatment has well-recognised problems. Firstly, hypochlorous acid can be lost from a pool in bright sunlight in as little as three to four hours. Secondly, chlorine in swimming pools reacts with organic compounds arising from the decay of vegetable matter and from perspiration and oils from the body to give chlorinated hydrocarbons which themselves are potential health hazards. Thirdly, in covered pools, a chlorination level of greater than one part per million may give rise to a potential health hazard if the chlorine that is released to the air exceeds the maximum permissible level of 0.03 milligrams of chlorine per meter². Fourthly, a small fraction of the population is allergic to chlorine even at very low levels causing eye irritation and the like. Fifthly, chlorine, being an oxidising agent, reacts with organic and inorganic dyes resulting in discolouration and bleaching of materials such as swimwear and vinyl pool liners.

The prior art has suggested alternatives to conventional chlorination of swimming pools for protecting bathers against contamination. Wojtowicz, in United States Patent No 4389318, discloses a rapidly dissolving solid mixture containing trichloroisocyanuric acid and an alkali metal bicarbonate. In addition, Wojtowicz suggests the use of several algaecides including poly[ oxyethylene-(dimethylimino)ethylene-(dimethyliminoethylene dichloride)]. In order, however, to obtain the minimum active level of 7.0 ppm of poly[ oxyethylene-(dimethylimino)ethylene-(dimethyliminoethylene dichloride)], the Wojtowicz formulation would produce an unacceptable high level of chlorine of 4.67 ppm. Moreover, the Wojtowicz formulation provides no ingredients for affording continuous protection against the more resistant forms of algae commonly known as "black" algae.

It is therefore an object of the present invention to provide an improved method of water treatment, and a product suitable for use in that method, which makes it possible to maintain an effective concentration of algaecide, bactericide, descaling agent and destaining agent at lower concentraions of chlorine than are required for the effectiveness of prior art treatment methods.

It is a further object of the invention to provide a method of water treatment whereby the necessary frequency of treatment may be less than that required by many prior art methods.

The method according to the present invention for the treatment of bodies of water comprises adding to the water a liquid component having at least three parts as hereinafter described, said parts being added separately or in combination, and an oxidising component. The three parts of the liquid component are a polymeric cationic quaternary ammonium coumpound, a sequestering agent and a copper salt.

In a preferred form of the method according to the present invention, the three parts of the liquid component are mixed before adding to the water as a single liquid component and the oxidising component is in solid form, preferably in the form of one or more tablets.

Whether the parts of the liquid component are added separately or together, each part is as now described. The first part of the liquid component is a polymeric cationic quaternary ammonium compound or a mixture of polymeric cationic quaternary ammonium compounds which have algaecidal and bactericidal properties. Such polymeric cationic quaternary ammonium compounds should be compatible with the oxidizing agent disclosed below and preferably have low foaming characteristics. The preferred polymeric cationic quaternary ammonium compound is the polymeric concentrate poly [ oxyethylene (dimethylimino) ethylene (dimethylimino ethylene dichloride)] described by Pera and Johnson in United States Patent No 3771989 and commercially available under the trade mark WSCP from Buckman Laboratories of Memphis, Tennessee, USA. WSCP typically comprises 60% active ingredients and 40% inert ingredients.

The second part of the liquid component is a sequestering agent, which acts as a descaling and destaining agent and may, for example, be ethylendiamine tetraacetate (EDTA), a citrate or a phosphate, normally in solution form with the pH adjusted with caustic soda to a pH of between 3 and 8. The preferred sequestering agent is hydroxyethylidene diphosphonic acid or its disodium salt. Hydroxyethylidenediphosphonic acid is commercially available under the trade mark Phos-6 from Buckman Laboratories of Memphis, Tennessee, USA. The addition of this sequestering agent has been found to be particularly important in spa-baths and hot-tubs, where the temperatures (38° - 43° C) lead to precipitation of insoluble calcium salts, particularly in hard water areas.

The third part of the liquid component of the present invention is a copper salt such as copper sulphate $(CuSO_4 5H_2O)$, which works in combination with the sequestering agent. The addition of the copper salt greatly improves the algaecidal properties of the cationic quaternary ammonium compound, particularly towards "black" algae.

The oxidising component of this invention provides for the appropriate low concentration of chlorine in the pool over an extended period of time of up to fourteen days. The oxidising component may include sodium perborate, potassium persulphate, an alkali or alkaline earth hypochlorite, trichloroisocyanurate, or an alkali metal dichloroisocyanurate. The preferred oxidising component of the present invention includes a slow-dissolving and a fast-dissolving solid tablet. The slow-dissolving tablet may be 100% trichloroisocyanurate. The fast-dissolving tablet may consist of sodium dichloroisocyanurate or trichloroisocyanurate (70% to 75% by weight) and sodium carbonate or sodium bicarbonate (20% to 25% by weight). The sodium carbonate or sodium bicarbonate reacts with the water to speed the dissolving of the oxidising agent. The oxidising tablets may be placed in a cartridge in a skimmer or weir in a floating basket in the pool, or in a basket attached to the side of a hot-tub or spa-bath. The fast-dissolving tablets provide a booster dose of chlorine while the cartridge or floating basket is designed to allow the slow-dissolving tablets to provide a constant 0.2 to 0.4 ppm chlorine for a period of fourteen days in swimming pools and seven to fourteen days in spa-baths and hot-tubs.

An important feature of the present invention is that, by careful selection of the amounts of the ingredients of the liquid component, it is possible to ensure that the liquid and oxidising components in combination can kill all bacteria commonly observed in swimming pools, spa-baths and hot-tubs. Careful formulation of the liquid can provide a liquid which is stable, does not separate into layers and has a shelf life of up to one year.

The liquid compnent may very conviently be added to the pool, spa-bath or hot-tub at approximately monthly intervals in sufficient amounts to provide a concentration of between 7.0 and 20 ppm of the polymeric cationic quaternary ammonium compound, between 0.35 and 3.5 ppm of sequestering agent and between 0.06 and 0.6 ppm of copper salt. Such concentrations have been found to give complete protection against bacteria and algae and sufficient descaling, flocculating, and clarifying ability in the presence of 0.2 to 0.4 ppm of chlorine. These concentrations may, of course, be varied within the specified ranges to accommodate the differing conditions found in hot-tubs, spa-baths and pools and the differing bather loads normally found in commercial and public facilities compared with domestic facilities.

The present invention is particularly effective at temperatures above 30° C and especially in spa-baths and hot-tubs, for example at temperatures of the order of 40° C. The liquid component, particularly in the specified concentrations, stabilises the oxidising component and helps to decrease the losses observed in the chlorine concentrations at such high temperatures.

The invention also includes a product suitable for use in the method according to the invention, which product comprises:-

(a) a liquid component comprising a polymeric cationic quaternary ammonium compound, a sequestering agent and a copper salt; and

(b) an oxidising component.

The invention will now be further described by means of the following Examples, which are given by way of illustration and are not intended to limit the scope of the invention.

## Example 1

An 18,000 US gallon swimming pool was treated by adding to the water each month a liquid component as set forth below and by adding every two weeks a solid oxidising component as also set forth below, in the quantities given so as to yield the concentrations specified:-

| Liquid Component | Weight Added | Approximate Liquid Concentration |
|---|---|---|
| WSCP (60% active ingredient) | 1.533 kg | 13.5 ppm |
| Phos - 6 | 0.136 kg | 2.00 ppm |
| $CuSO_4 5H_2O$ | 0.014 kg | 0.20 ppm |

| Solid Component | Weight Added | Approximate Chlorine Concentration |
|---|---|---|
| Slow-dissolving tablet | 0.367 kg | 0.2 - 0.4 ppm |
| Fast-dissolving tablet | 0.132 kg | 0.2 - 0.4 ppm |

This treatment at the specified intervals was found to keep the pool effectively free of all pathogenic materials on a continuous basis and to give a good resistance agains "black" algae and the occurrence of turbidity in the water.

## Example 2

To a pool of 25,000 US gallon capacity was added each month a liquid component of the following composition in the amounts specified to give the approximate liquid concentrations shown:

| Liquid Component | Amount Added | Approximate Liquid Concentration |
|---|---|---|
| WSCP (60% active ingredient) | 2.127 kg | 13.5 ppm |
| Phos - 6 | 0.191 kg | 2.0 ppm |
| $CuSO_4 5H_2O$ | 0.019 kg | 0.2 ppm |

The strong acidity of the Phos-6 was reduced, before introducing the liquid component to the pool, to a pH value between 3.0 and 8.0 by careful addition of caustic soda.

At two-weekly intervals, the following solid oxidising component was added to the pool in the amounts specified, to give the approximate chlorine concentrations shown:

4

| Solid Component | Amount Added | Approximate Chlorine Concentration |
|---|---|---|
| Slow-dissolving tablet | 0.508 kg | 0.2 – 0.4 ppm |
| Fast-dissolving tablet | 0.181 kg | 0.2 – 0.4 ppm |

The treatment proved to be fully effective protection against pathogens and a good defence against turbidity and "black" algae, while avoiding the many disadvantages characteristic of the higher chlorine levels used in many prior art methods.

Spa-baths and hot-baths and also pools of other sizes should be treated with quantities of liquid and oxidising components determined by pro rata extrapolation from the above-exemplified quantities.

**Claims**

1. A method for the treatment of a body of water comprising adding to the water a liquid component comprising a polymeric cationic quaternary ammonium compound, a sequestering agent and a copper salt and also adding to the water an oxidising component.

2. A method as claimed in claim 1, wherein the constituents of the liquid component are mixed together before the liquid component is added to the body of water.

3. A method as claimed in either of the preceding claims, wherein the oxidising component is in solid form.

4. A method as claimed in any of the preceding claims, wherein the liquid component is added to the water at regular intervals and the oxidising component is added to the water at more frequent regular intervals.

5. A method as claimed in any of the preceding claims, wherein the polymeric cationic quaternay ammonium compound is poly[oxyethylene (dimethylimino) ethylene (dimethylimino ethylene dichloride)].

6. A method as claimed in any of the preceding claims, wherein the polymeric cationic quaternary ammonium compound is added to the water in a quantity giving a concentration of between 7.0 and 20 ppm.

7. A method as claimed in any of the preceding claims, wherein the sequestering agent is ethylenediamine tetraacetate, a citrate or a phosphonate.

8. A method as claimed in any of claims 1 to 6, wherein the sequestering agent is hydroxyethylidenediphosphonic acid or its disodium salt.

9. A method as claimed in any of the preceding claims, wherein the sequestering agent is added to the water in a quantity giving a concentration of between 0.35 and 3.5 ppm.

10. A method as claimed in any of the preceding claims, wherein the copper salt is copper sulphate.

11. A method as claimed in any of the preceding claims, wherein the copper salt is added to the water in a quantity giving a concentration of between 0.06 and 0.6 ppm.

12. A method as claimed in any of the preceding claims, wherein the oxidising component is sodium perborate, potassium persulphate, an alkali metal or alkaline earth metal hypochlorite, trichloroisocyanurate or an alkali metal dichloroisocyanurate.

13. A method as claimed in claim 12, wherein the oxidising component comprises a slower-dissolving tablet and a faster-dissolving tablet.

14. A method as claimed in claim 13, wherein the slower-dissolving tablet is wholly of trichloroisocyanurate and wherein the faster-dissolving tablet comprises sodium dichloroisocyanurate or trichlorosiocyanurate in combination with sodium carbonate or bicarbonate.

15. A method as claimed in any of the preceding claims, wherein the oxidising component is added to the water in a quantity giving a chlorine concentration of between 0.2 and 0.4 ppm.

16. A product for addition to a body of water in the method according to any of the preceding claims, comprising a liquid component which comprises, in admixture, a polymeric cationic quaternary ammonium compound, a sequestering agent and a copper salt and an oxidising component in tablet form.

17. A product as claimed in claim 16, wherein the liquid component comprises, in admixture, poly-[oxyethylene(dimethylimino) ethylene (dimethylimino ethylene dichloride)], hydroxyethylidenediphosphoric acid or its disodium salt, and copper sulphate and the oxidising component is trichloroisocyanurate or sodium dichloroisocyanurate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PATENTJOERNAAL, August 1985; & ZA-A-83/7847 (JOHAN G. VAN DER MERWE) <br> * Page 131, column 1, 3rd abstract * | 1-12 | C 02 F 1/50 <br> E 04 H 3/20 <br> C 02 F 1/00 |
| D,Y | US-A-3 771 989 (J.D.PERA et al.) <br> * Column 1, line 49 - column 2, line 68 * | 1-12 | |
| Y | FR-A-2 244 360 (CHEMOFORM) <br><br> * Page 3, line 15 - page 4, line 15 * | 1-4,6, 7,12-17 | |
| Y | FR-A-2 440 919 (J.C.SCHOUVEY) <br><br> * The whole document * | 1-4,6, 7,12-17 | **TECHNICAL FIELDS SEARCHED (Int. Cl.4)** <br><br> C 02 F <br> E 04 H |
| A | CA-A-1 146 707 (S.G.GUTTORMSON) <br> * Pages 5-6; claims * | 1-17 | |
| A | DE-A-3 341 757 (H.FELDMANN) <br><br> * Pages 1-3; claims * | 1,2,7-9 | |
|  | --- -/- | | |

The present search report has been drawn up for all claims

| Place of search | Date of completion of the search | Examiner |
|---|---|---|
| THE HAGUE | 27-05-1987 | VAN AKOLEYEN H.T.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-4 030 907 (L.R.McNALL)<br>* Claims 1-19 * | 1-7 | |
| A | EP-A-0 136 973 (B.STRAUSAK)<br>* Claims 1-12 * | 1,12 | |
| A | DE-A-2 653 448 (BP)<br>* Claims 1-8 * | 1,10 | |

TECHNICAL FIELDS
SEARCHED (Int. Cl.4)

The present search report has been drawn up for all claims

| Place of search | Date of completion of the search | Examiner |
|---|---|---|
| THE HAGUE | 27-05-1987 | VAN AKOLEYEN H.T.M. |